# EUROPEAN PATENT SPECIFICATION

(11) **EP 3 855 304 B1**
(45) Date of publication and mention of the grant of the patent: **01.07.2026**
(21) Application number: 20153538.2
(22) Date of filing: 24.01.2020
(51) Int. Cl.: G06F 3/12

(54) **DOCUMENT PROCESSING SYSTEM AND METHOD OF PROCESSING A PRINT JOB ON A PRINTER AND A FINISHER**
DOKUMENTENVERARBEITUNGSSYSTEM UND VERFAHREN ZUR VERARBEITUNG EINES DRUCKAUFTRAGS AUF EINEM DRUCKER UND EINEM FINISHER
SYSTÈME DE TRAITEMENT DE DOCUMENTS ET PROCÉDÉ DE TRAITEMENT D'UNE TÂCHE D'IMPRESSION SUR UNE IMPRIMANTE ET UN FINISSEUR

(43) Date of publication of application: 28.07.2021
(73) Proprietor: Canon Production Printing Holding B.V., 5914 HH Venlo (NL)
(72) Inventor: VAN GOOL, Louis C.M., 5914 HH Venlo (NL); DENKERS, Jasper, 5914 HH Venlo (NL); BRÜNNER, Marvin P., 5914 HH Venlo (NL)
(74) Representative: Canon Production Printing IP Department

(56) References cited:
- EP-A1- 3 217 271
- EP-A1- 3 591 512

## Description

### FIELD OF THE INVENTION

The present invention relates to a document processing system for processing a print job to be printed and finished resulting into an end product according to print job settings, the document processing system comprising a user interface, a print controller and a print engine.

### BACKGROUND OF THE INVENTION

A document processing system is known to comprise a printer and one or more finishers. The printed sheets can be processed on one or more finishers to produce a variety of end products like loose leaf documents, booklets, brochures, folders, perfect bound books etc. Moreover, the sheets can be processed by one or more finishers before printing, for example pre-punching or pre-perforating. Hereinafter finishing is understood to include finishing actions before printing and finishing actions after printing. Hereinafter finishing actions mentioned in any specification of finishing actions are to be envisioned, for example in a job definition format (JDF) specification.

The variety in finisher devices is large. Finishers may be in-line, online, near-line, or offline. Finishers may perform only a single action like a guillotine trimmer that performs a single cut, or a series of actions like a perfect bound book maker performing milling, glueing, covering and cutting.

EP 3591512 A1 describes a document processing system for a plurality of devices, wherein each device is described in a dedicated device model.

EP 3217271 A1 describes a computer-implemented method of automatically optimizing a print production process based on a received printer matter specification.

A problem arises when finishers have different operating ranges and constraints. To tune the document processing system to each finisher which is needed for a print job, the controller of the document processing system must be prepared with dedicated source code to reach seamless cooperation between the printer and the finisher. The dedicated source code can only be written and understood by software specialists and the customer is dependent on the availability of the software specialists to realise such a seamless cooperation between printer and finisher. Nowadays finishers are integrated using e.g. DFD, but use of DFD only covers timing and sheet orientation. Currently there is overhead in modeling finishers by information exchange between mechanical engineers and software engineers.

It is an objective of the present invention to provide a document processing system by which the problems described here-above are mitigated.

### SUMMARY OF THE INVENTION

In order to achieve that objective, the document processing system comprises an editing system for specifying a finisher to be used in the document processing system for finishing the print job, wherein the editing system is configured as according to claim 1 and
the print controller is configured as according to claim 1.

By doing so, a user being a non-software-specialist is able to model a finisher since a domain-specific language (DSL) is used to write executable finisher specifications and to automatically generate constraints models for solving and optimization. As a consequence a turnaround time for integration of (third party) finishing devices with a printer is reduced. Non (software) engineers can model finishers such that parts of the modeling process can be moved from a printer manufacturer to non (software) engineers. Configuration and optimization functionality for operators of printers with finishers are improved and can be tuned to the objective of the end product.

The flexibility in modeling finishers according to the invention increases a number of finishers that can be modeled and integrated. The increased coverage of the physical domain of finishers now includes objects and operations. The invention helps in managing software for many finishers that are similar but have variable properties and constraints. For example, all booklet makers do a half fold, but each booklet maker may have unique constraints on a maximum stack thickness.

According to an embodiment the print controller is configured to provide, by solving the constraint model (9), previews of the end product resulting from the print job, and to display the provided previews via the user interface of the document processing system.

According to an embodiment the objective of the end product is at least one out of a minimal waste of product resources, a maximum throughput of end products, a minimal need of human interaction, a minimal cost or energy spent, and a maximum product print and finish quality. Configuration and optimization functionality for operators of printers with finishers are improved and can be tuned to the objective of the end product. For example, optimal parameters for producing a print application can be automatically found while minimizing paper waste.

According to an embodiment the specifications of the processing actions and finishers are single sources of truth that are both executable software and have an information exchange format between printer and finisher domain experts. The editing system is not limited to support specific finisher operations or sheet properties and can extend the finisher model with an additional number of finisher operations and an additional number of sheet properties. By using single sources of truth for finishers, development effort is reduced and validation possibilities by mechanical engineers to catch print errors early are increased. By doing so, the specifications are written in a language that, in contrast to a general-purpose programming language (which is executable), has constructs/concepts/syntax from the domain of finishers and thus is easier to understand for e.g. mechanical engineers, and in contrast to a current documentation format such as Word documents (which is not executable but is understandable by mechanical engineers), is executable. In other words, the specifications are single sources of truth that are both executable software and an information exchange format between domain experts (the software engineers and mechanical engineers).

According to an embodiment the printer and finisher domain specific language has a textual notation format or a graphical notation format.

According to an embodiment the generated constraint model is implemented in a general purpose programming language.

The present invention also relates to a method according to claim 6.

According to an embodiment the method comprises the steps of
- the print controller providing, by solving the constraint model, previews of the end product resulting from the print job, and
- the user interface displaying the provided previews.

The present invention also relates to a non-transitory recording medium comprising computer executable program code configured to instruct at least one computer to perform the method according to the invention in order to process a print job on a document processing system according to the invention.

### BRIEF DESCRIPTION OF THE DRAWINGS

Embodiment examples will now be described in conjunction with the drawings, wherein:
- FIG. 1: is an overview of the document processing system to be controlled according to an embodiment;
- FIG. 2 - 10: is an example of an application of a guillotine using the editing system according to an embodiment;
- FIG. 11 - 12: is an example of an application of a multi half fold action according to an embodiment;
- FIG. 13: is a flow diagram of a first embodiment of the method according to an embodiment; and
- FIG. 14: is a flow diagram of a second embodiment of the method according to an embodiment.

### DETAILED DESCRIPTION OF EMBODIMENTS

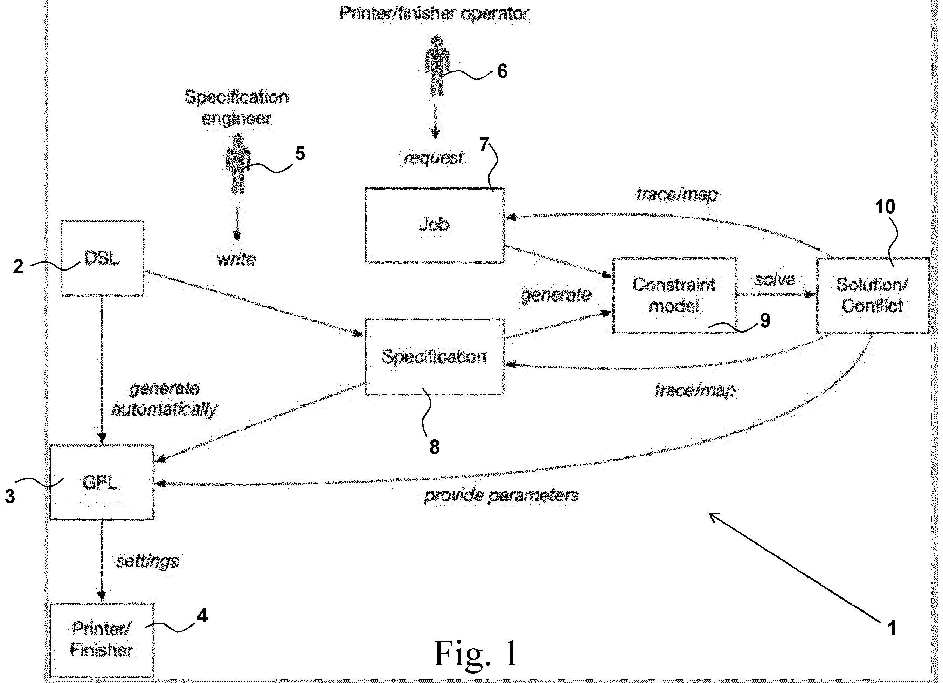

FIG. 1 is an overview of the document processing system 1 to be controlled according to the present invention. The high level overview comprises a printer 4 and at least one finisher 4, a print controller 3 comprising executable source code based on a generic programming language (GPL), an editing system 2 based on a domain-specific language (DSL) implementation in order to let finishers be modeled by a non-software engineer 5 also known as specification engineer. The document processing system 1 is configured to receive a print job request 7 input by a printer / finisher operator 6 or automatically submitted to a print job queue for the printer 4. From the print job 7 print job constraints are generated which are input for a constraint model 9. Also specifications 8 of the finisher model derived from the editing system 2 are input for the constraint model 9. The constraint model 9 is then solved and delivers a solution 10 or conflict 10 in the form of processing parameters and process optimizations. The processing parameters and process optimizations are communicated to the print controller 3. If the finisher 4 is provided with a dedicated finisher controller (not shown), the processing parameters and process optimizations for the finisher 4 may be directly communicated to the finisher controller of the finisher 4.

The specification engineer 5 being a user of the DSL may be an engineer of a third party finisher producer. The specification engineer 5 is able to write a specification 8 of the finisher 4 by means of the DSL loaded on the editing system 2. A mechanical engineer (not shown) may validate the specification 8 and give feedback to the specification engineer 5. Ideally, the mechanical engineer is the writer of the specification 8.

From the specification 8 two different targets are automatically generated. Firstly, the constraint model 9 is generated, either with or without taking into account an actual job request. Without a job request, the constraint model could be solved and its output 10 (the solution or conflict) is traced back to the specification 8, e.g. to give the specification engineer 5 interactive feedback on tests during validation. Once the software for the finisher 4 generated from this approach is deployed, constraint models 9 are also generated with taking into account jobs 7 as requested by the printer/finisher operator 6. When solving such a model 9, optimal parameters are derived for the job with e.g. an objective in mind such as minimizing paper waste.

Secondly, general-purpose programming language (GPL) code is generated that may use a sheet language library in the print controller 3, which may be finisher modelling framework software. The code is now automatically generated.

When optimal parameters are derived from the constraint model 9 by a solver of the constraint model 9, the optimal parameters are sent to the print controller 3 which does the actual control of the printer 4 and finishers 4.

The essence in this implementation is the DSL artefact in the editing system 2 that is used to write specifications 8 and from which both the GPL code on the print controller 3 and the constraint model 9 are generated. The constraint model is used within editing system (excluding job information) and within the print controller (including job information).

The constraint model 9 is crucial for problem space exploration. The problem space is defined as: finisher input (e.g. the possibility to choose between A4 and A3 paper) + configuration parameters (e.g. trimming distances, rotation angle) + finisher output (e.g. output booklet dimensions). Optimization on one or more objectives is used to explore possibilities within the problem space.

In addition to considering this problem space for a single production route, multiple production routes (i.e. different compositions of devices) may be considered.

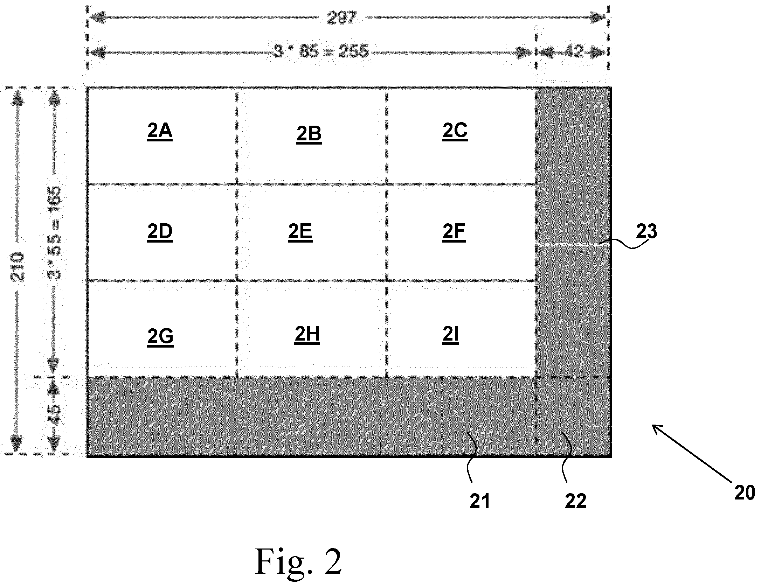

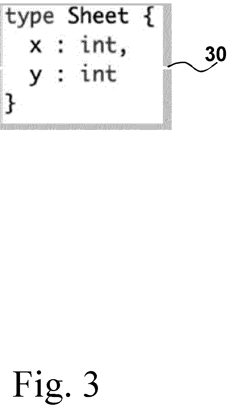

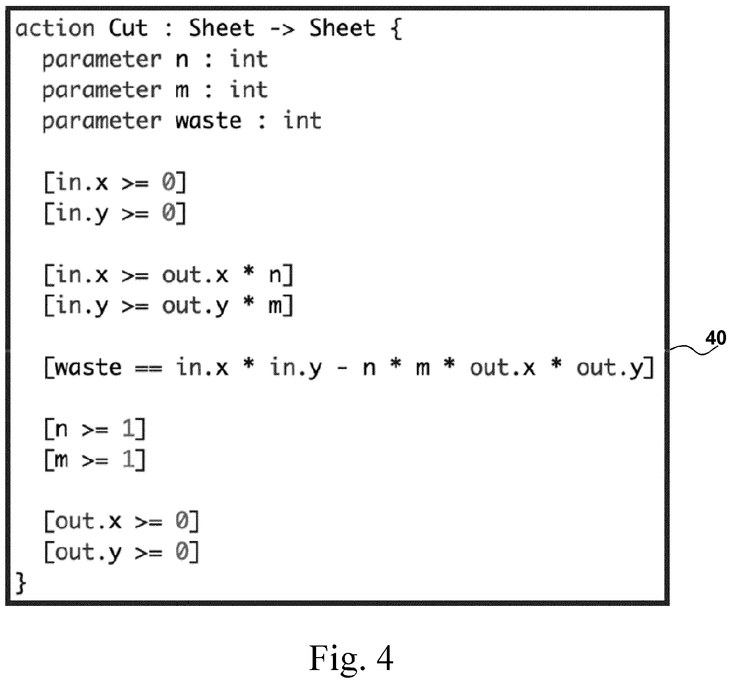

Fig. 2 shows an example with respect to a guillotine for creating business cards. A guillotine is (a part of) a finisher that divides a sheet into smaller sheets. Fig. 2 represents an example effect of a guillotine cutting 9 business cards 2A - 2I (85 * 55 mm) from an A4 sheet 20. The red shaded area 21, 22, 23 indicates the paper waste. To specify the business cards 2A - 2I in the DSL by means of the editing system 2 a specification of sheets (with size x by y) is needed. Fig. 3 shows such a specification 30. Next, a specification 40 of the cut action is provided as shown in Fig. 4.

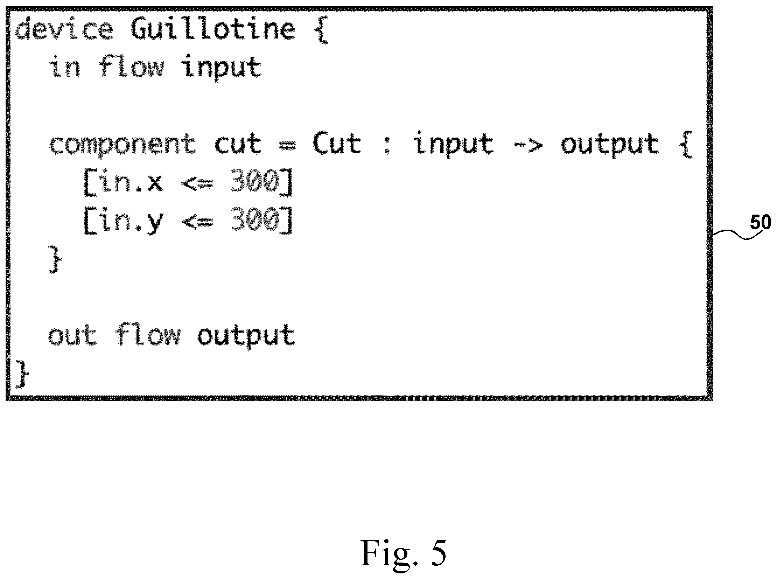

Thirdly, an instantiation 50 of the action in a device with specific constraints on the maximum size of its input (300 by 300mm) is provided as shown in Fig. 5.

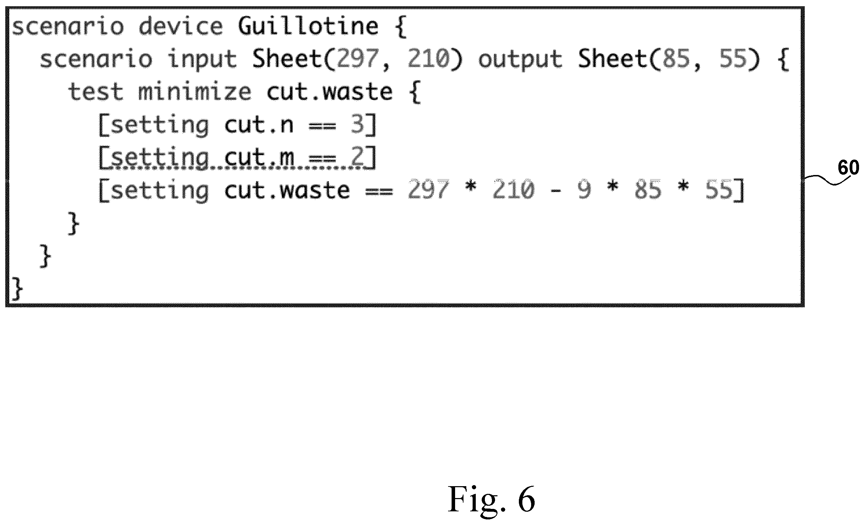

Finally, tests 60 can be written as shown in Fig. 6. In a test shown in Fig. 6 a waste of the guillotine is minimized, which as a result has maximizing the number of business cards produced from a single A4. An error in the test specification 60 (it expects 2 rows, instead of 3) is presented to the user interactively (i.e. red dashed underlined), and will disappear after the user fixes the error.

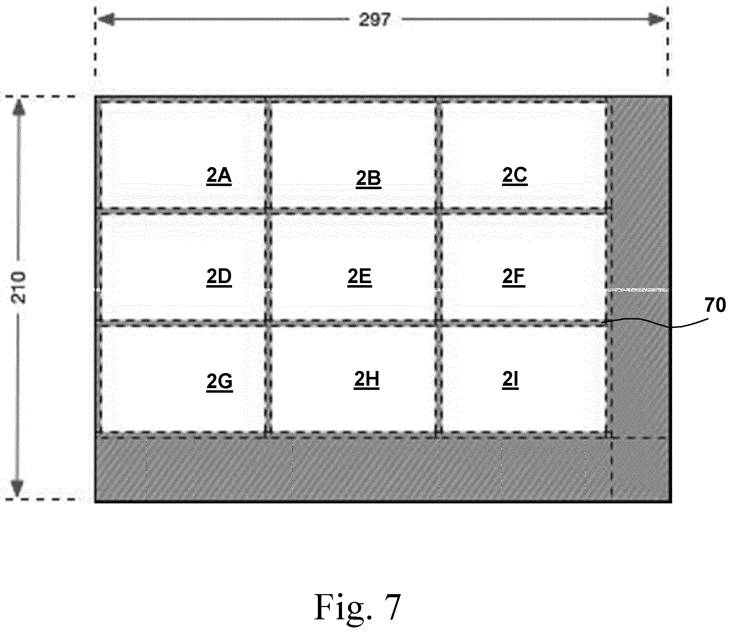

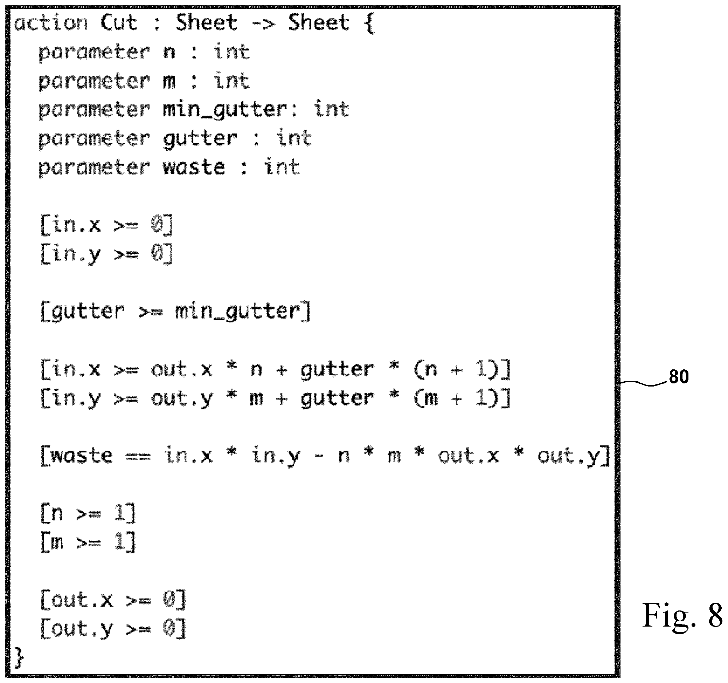

Another specification of the guillotine includes a gutter 70 between the business cards 2A - 2I shown in Fig. 7. The specification of the cut action may be extended with a min_gutter parameter as shown in Fig. 8. The specification 80 of the action may remain generic.

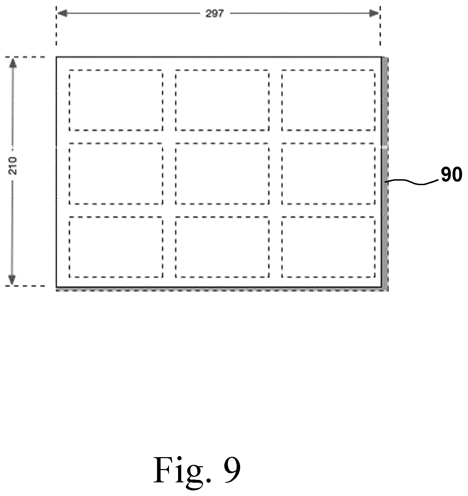

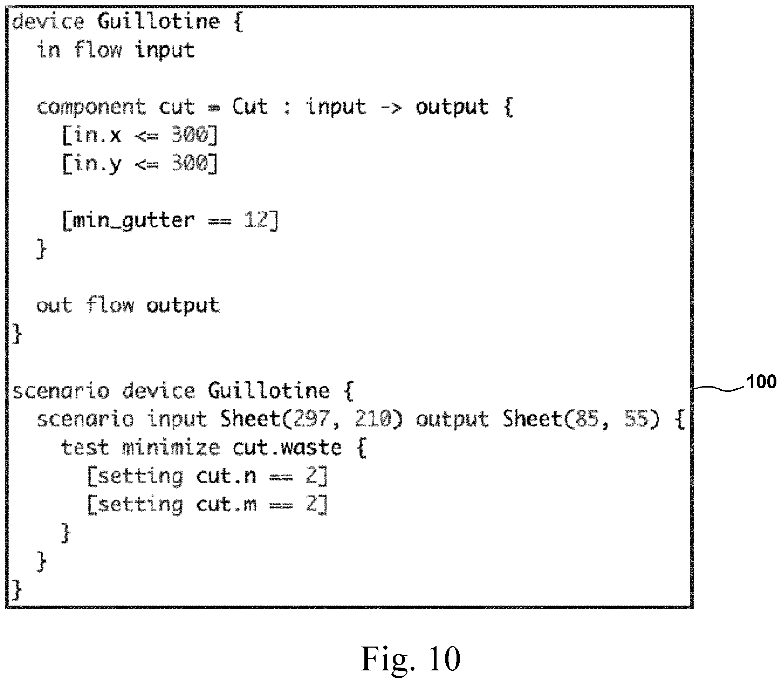

If the minimal gutter is large, e.g. 12 mm, an A4 sheet is too small for 9 business cards Fig. 9 shows a red shaded area 90 which indicates an overflow of gutter that does not fit on the A4 sheet. When describing this issue using the DSL (see min_gutter == 12) in a specification 100 shown in Fig. 10, only 4 business cards fit on an A4 sheet.

The example shown in Fig. 8 - 10 demonstrates a first improvement of global optimization by deriving process parameters to minimize waste and a second improvement of product line coverage by the generic specification 100 of the cut action that is reusable between multiple finishers, specifically instantiated within a concrete finisher with e.g. 12 mm as a minimum cutting distance to an edge.

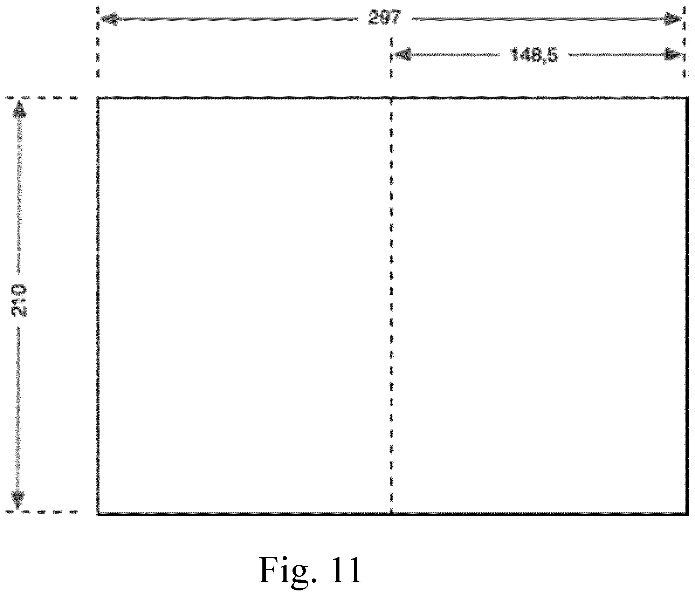

Fig. 11 shows an example of modeling a multi half fold and a face trimming action. When half folding an A4 sheet as shown in Fig. 11, the result has its x dimension divided by 2 and its thickness multiplied by 2.

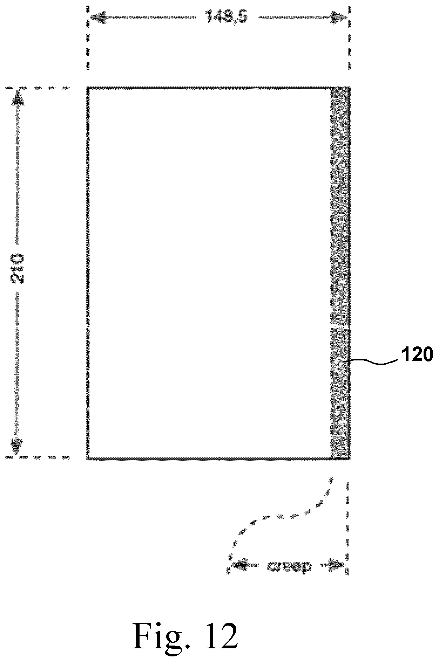

The sheet specification in Fig. 3 only has an x and y dimension and thus for the specification of the multi half fold the dimensions of the A4 sheet need to be extended with a thickness dimension (not shown). Multi half folding introduces creep at the face of the folded stack of sheets. The creep is shown in Fig. 12 as a red shaded area 120. With a second action (face trim), this creep can be removed.

The specification of the face trim (not shown) can take into account that the face trim should be at least half of the thickness of the stack (as a rule of thumb).

The example of Fig. 11 demonstrates a first improvement of physical coverage (incorporate thickness of a stack when determining a minimal trimming distance), a second improvement of product line coverage (multiple actions are combined), and a third improvement of global optimization (the minimal input size may be determined based on the output size and thickness).

According to an embodiment process parameters are set for external finishers being connected via a DFD interface. Such process parameters are for instance on sheet and set timing, feed preference and so on. However, these process parameters do not specify this finisher in such a way that all its capabilities and constraints are known by the document processing system 1. By offering a user interface, for instance a text editor that accepts the mentioned DSL, the printer 4 can be extended with new finishers after installation, with complete support of correct imposition, constraints, previews, etc. According to another embodiment the editing system 2 may comprise a graphical user interface that accepts the mentioned DSL.

For example for a print system a new external perfect binder for off line usage has been introduced. Then the original print system has to produce the stacks for a book block and a cover. The service technician then opens the editing system 2 and defines the processing actions inside the perfect binder. These are very similar to JDF processing steps (e.g. ToGlue, ToCover, ToTrim). Also the service technician specifies any constraints on the processing actions (like maximum book block thickness, trimming distances, etc). An output of the editing system 2 is an executable model that can be run in the print system and provides processing parameters, previews and possibilities to optimize to a target (e.g. minimal waste).

The example here-above demonstrates a first improvement of productivity (less effort required to integrate the new finisher) and a second improvement of collaboration (non-software engineers parties may integrate the new finisher themselves).

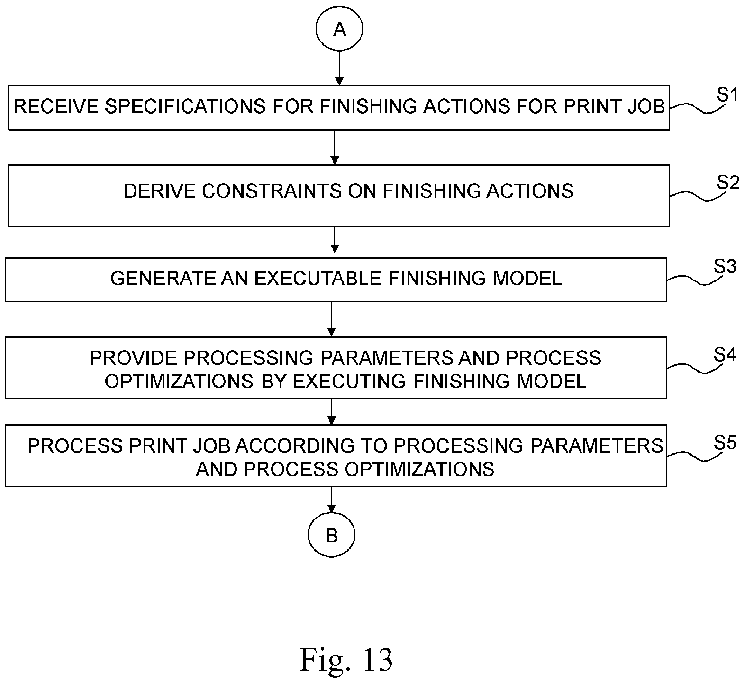

Fig. 13 is a flow diagram of a first embodiment of the method.

The method is used for processing a print job to be printed and finished resulting into an end product according to print job settings in the document processing system according to the embodiment comprising the user interface, the print controller 3, the print engine 4 and the editing system 2 for specifying a finisher 4 to be used in the document processing system 1 for finishing the print job 7. The user interface may be part of the printer 4, the print controller 3 and/or the editing system 2. The method starts in a starting point A which leads to a first step S1.

In the first step S1 the editing system 2 is receiving by means of the user interface specifications of processing actions for the finisher 4 in a printer and finisher domain specific language (DSL).

In a second step S2 the editing system 2 automatically generates at least one constraint model based on the processing actions (formulated in a printer and finisher domain specific language (DSL)) for the finisher 4.

In a third step S3 the editing system 2 automatically generates an executable finishing model runnable in the print controller. The executable finishing model is the constraint model 9 shown in Fig. 1.

In a fourth step S4 the print controller 3 provides, by executing the finishing model 9, processing parameters and process optimizations to an objective of the end product resulting from the print job 7.

In a fifth step S5 the print controller 3 processes the print job 7 on the print engine 4 while taking the provided processing parameters and provided process optimizations into account.

The method ends in an endpoint B.

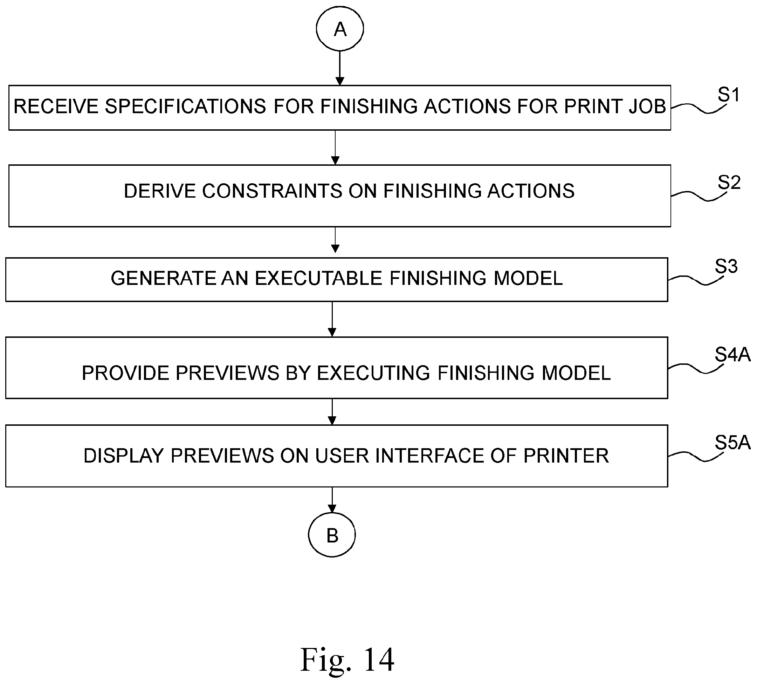

Fig. 14 shows another embodiment of the method.

The steps S1 - S3 of the method in Fig. 13 are repeated but the steps S4 and S5 are replaced by the steps S4A and S5A. Embodiments of the methods in Fig. 13 and Fig. 14 may be combined.

In the first additional step S4A the print controller 3 provides, by executing the finishing model 9, previews of the end product resulting from the print job 7.

In the second additional step S5A the user interface displays the provided previews. The user interface may be part of the printer 4, the print controller 3 and/or the editing system 2.

## Claims

1. Document processing system (1) for processing a print job (7) to be printed and finished resulting into an end product according to print job settings, the document processing system (1) comprising a user interface, a print controller (3), a print engine and an editing system (2) for specifying a finisher (4) to be used in the document processing system (1) for finishing the print job (7), wherein the editing system (2) is configured
- to receive by means of the user interface specifications (8) of processing actions for the finisher in a printer and finisher domain specific language,
- to automatically generate, based on the specifications (8), a constraint model (9), wherein the constraint model (9) is used within the editing system (2) without taking into account the print job (7), and
- to automatically generate, based on the specifications (8), an executable finishing model implemented in a general purpose programming language, wherein the executable finishing model is runnable in the print controller and takes into account the print job (7), and
the print controller is configured
- to provide, by executing the finishing model, processing parameters and process optimizations to an objective of the end product resulting from the print job (7), and
- to process the print job (7) on the print engine while taking the provided processing parameters and provided process optimizations into account.

2. Document processing system according to claim 1, wherein the print controller is configured
- to provide, by executing the finishing model, previews of the end product resulting from the print job, and
- to display the provided previews via the user interface of the document processing system.

3. Document processing system according to any of the preceding claims, wherein the objective of the end product is at least one out of a minimal waste of product resources, a maximum throughput of end products, a minimal need of human interaction, a minimal cost or energy spent, and a maximum product print and finish quality.

4. Document processing system according to any of the preceding claims, wherein the specifications of the processing actions and finishers are single sources of truth that are both executable software and have an information exchange format between printer and finisher domain experts.

5. Document processing system according to any of the preceding claims, wherein the printer and finisher domain specific language has a textual notation format or a graphical notation format.

6. Method for processing a print job (7) to be printed and finished resulting into an end product according to print job settings in a document processing system (1) comprising a user interface, a print controller (3), a print engine and an editing system (2) for specifying a finisher (4) to be used in the document processing system (1) for finishing the print job (7), wherein the method comprises the steps of
- the editing system (2) receiving (S1) by means of the user interface specifications (8) of processing actions for the finisher (4) in a printer and finisher domain specific language,
- the editing system (2) automatically generating, based on the specifications (8) a constraint model, wherein the constraint model (9) is used within the editing system (2) without taking into account the print job (7),
- the editing system (2) automatically generating, based on the specifications (8), an executable finishing model implemented in a general purpose programming language, wherein the executable finisher model is runnable in the print controller and takes into account the print job (7),
- the print controller providing, by executing the finishing model, processing parameters and process optimizations to an objective of the end product resulting from the print job (7),
and
- the print controller processing the print job (7) on the print engine while taking the provided processing parameters and provided process optimizations into account.

7. Method according to claim 6, wherein the method comprises the steps of
- the print controller providing, by executing the finishing model, previews of the end product resulting from the print job, and
- the user interface displaying the provided previews.

8. A computer program product embodied on a non-transitory computer readable medium that, if executed on a processor, performs the steps of the method of any of claims 6 - 7.

## Patentansprüche

1. Dokumentenverarbeitungssystem (1) zur Verarbeitung eines Druckauftrags (7), der gedruckt und weiterverarbeitet werden soll, um gemäß den Druckauftragseinstellungen ein Endprodukt zu erzeugen, wobei das Dokumentenverarbeitungssystem (1) eine Benutzerschnittstelle, eine Drucksteuerung (3), eine Druck-Engine und ein Bearbeitungssystem (2) zur Festlegung eines Finishers (4), der im Dokumentenverarbeitungssystem (1) zur Weiterverarbeitung des Druckauftrags (7) verwendet werden soll, wobei das Bearbeitungssystem (2) so konfiguriert ist
- so, dass es über die Benutzerschnittstelle Spezifikationen (8) von Verarbeitungsaktionen für die Weiterverarbeitungsvorrichtung in einer drucker- und weiterverarbeitungsvorrichtungsspezifischen Sprache empfängt,
- auf der Grundlage der Spezifikationen (8) automatisch ein Constraint-Modell (9) zu generieren, wobei das Constraint-Modell (9) innerhalb des Bearbeitungssystems (2) verwendet wird, ohne den Druckauftrag (7) zu berücksichtigen, und
- auf der Grundlage der Spezifikationen (8) automatisch ein ausführbares Finishing-Modell zu generieren, das in einer allgemeinen Programmiersprache implementiert ist, wobei das ausführbare Finishing-Modell in der Drucksteuerung ausführbar ist und den Druckauftrag (7) berücksichtigt, und
wobei die Drucksteuerung so konfiguriert ist,
- durch Ausführung des Finishing-Modells Verarbeitungsparameter und Prozessoptimierungen bereitzustellen, die auf ein Ziel des aus dem Druckauftrag (7) resultierenden Endprodukts ausgerichtet sind, und
- den Druckauftrag (7) auf der Druckmaschine unter Berücksichtigung der bereitgestellten Verarbeitungsparameter und Prozessoptimierungen zu verarbeiten.

2. Dokumentenverarbeitungssystem nach Patentanspruch 1, wobei die Drucksteuerung so konfiguriert ist
- durch Ausführung des Finishing-Modells Vorschauen des aus dem Druckauftrag resultierenden Endprodukts bereitzustellen und
- die bereitgestellten Vorschauen über die Benutzeroberfläche des Dokumentverarbeitungssystems anzuzeigen.

3. Dokumentenverarbeitungssystem nach einem der vorstehenden Patentansprüche, wobei das Ziel des Endprodukts mindestens eines der folgenden ist: minimale Verschwendung von Produktressourcen, maximaler Durchsatz an Endprodukten, minimaler Bedarf an menschlicher Interaktion, minimale Kosten oder minimaler Energieaufwand sowie maximale Druck- und Veredelungsqualität des Produkts.

4. Dokumentenverarbeitungssystem gemäß einem der vorstehenden Patentansprüche, wobei die Spezifikationen der Verarbeitungsvorgänge und der Finisher als einheitliche Informationsquellen dienen, die sowohl als ausführbare Software vorliegen als auch ein Format für den Informationsaustausch zwischen Experten der Drucker- und Finisher-Domäne aufweisen.

5. Dokumentenverarbeitungssystem gemäß einem der vorstehenden Patentansprüche, wobei die domänenspezifische Sprache für Drucker und Finisher ein textuelles Notationsformat oder ein grafisches Notationsformat aufweist.

6. Verfahren zur Verarbeitung eines zu druckenden und zu veredelnden Druckauftrags (7), der gemäß den Druckauftragseinstellungen in einem Dokumentverarbeitungssystem (1) zu einem Endprodukt führt, wobei das Dokumentverarbeitungssystem (1) eine Benutzeroberfläche, eine Drucksteuerung (3), eine Druck-Engine und ein Bearbeitungssystem (2) umfasst, um eine im Dokumentverarbeitungssystem (1) zur Veredelung des Druckauftrags (7) zu verwendende Veredelungsvorrichtung (4) zu spezifizieren, wobei das Verfahren die folgenden Schritte umfasst:
- das Bearbeitungssystem (2) empfängt (S1) über die Benutzerschnittstelle Spezifikationen (8) von Verarbeitungsaktionen für das Finisher-Gerät (4) in einer drucker- und finisher-domänenspezifischen Sprache,
- das Bearbeitungssystem (2) generiert auf der Grundlage der Spezifikationen (8) automatisch ein Beschränkungsmodell, wobei das Beschränkungsmodell (9) innerhalb des Bearbeitungssystems (2) verwendet wird, ohne den Druckauftrag (7) zu berücksichtigen,
- das Bearbeitungssystem (2) generiert auf der Grundlage der Spezifikationen (8) automatisch ein in einer allgemeinen Programmiersprache implementiertes ausführbares Finishing-Modell, wobei das ausführbare Finishing-Modell in der Drucksteuerung lauffähig ist und den Druckauftrag (7) berücksichtigt,
- die Drucksteuerung durch Ausführung des Finishing-Modells Verarbeitungsparameter und Prozessoptimierungen bereitstellt, um ein Ziel für das aus dem Druckauftrag (7) resultierende Endprodukt zu erreichen,
und
- die Drucksteuerung den Druckauftrag (7) auf der Druckmaschine verarbeitet, wobei sie die bereitgestellten Verarbeitungsparameter und Prozessoptimierungen berücksichtigt.

7. Verfahren nach Anspruch 6, wobei das Verfahren die folgenden Schritte umfasst:
- die Drucksteuerung stellt durch Ausführung des Veredelungsmodells Vorschauen des aus dem Druckauftrag resultierenden Endprodukts bereit, und
- die Benutzeroberfläche die bereitgestellten Vorschauen anzeigt.

8. Ein Computerprogrammprodukt, das auf einem nichtflüchtigen, computerlesbaren Medium verkörpert ist und das, wenn es auf einem Prozessor ausgeführt wird, die Schritte des Verfahrens gemäß einem der Patentansprüche 6 bis 7 ausführt.

## Revendications

1. Système de traitement de documents (1) destiné à traiter un travail d'impression (7) devant être imprimé et mis en forme afin d'aboutir à un produit fini conformément aux paramètres du travail d'impression, le système de traitement de documents (1) comprenant une interface utilisateur, un contrôleur d'impression (3), un moteur d'impression et un système d'édition (2) destiné à spécifier un module de finition (4) à utiliser dans le système de traitement de documents (1) pour la finition du travail d'impression (7), dans lequel le système d'édition (2) est configuré
- pour recevoir, par l'intermédiaire de l'interface utilisateur, des spécifications (8) d'actions de traitement pour le module de finition dans un langage spécifique au domaine des imprimantes et des modules de finition,
- pour générer automatiquement, sur la base des spécifications (8), un modèle de contraintes (9), le modèle de contraintes (9) étant utilisé au sein du système d'édition (2) sans tenir compte du travail d'impression (7), et
- pour générer automatiquement, sur la base des spécifications (8), un modèle de finition exécutable implémenté dans un langage de programmation généraliste, le modèle de finition exécutable pouvant être exécuté dans le contrôleur d'impression et tenant compte du travail d'impression (7), et
le contrôleur d'impression est configuré
- pour fournir, en exécutant le modèle de finition, des paramètres de traitement et des optimisations de processus en vue d'un objectif du produit final résultant du travail d'impression (7), et
- pour traiter le travail d'impression (7) sur le moteur d'impression tout en tenant compte des paramètres de traitement fournis et des optimisations de processus fournies.

2. Système de traitement de documents selon la revendication 1, dans lequel le contrôleur d'impression est configuré
- pour fournir, en exécutant le modèle de finition, des aperçus du produit final résultant du travail d'impression, et
- pour afficher les aperçus fournis via l'interface utilisateur du système de traitement de documents.

3. Système de traitement de documents selon l'une quelconque des revendications précédentes, dans lequel l'objectif du produit final est au moins l'un des suivants : un gaspillage minimal des ressources de production, un débit maximal de produits finis, un besoin minimal d'intervention humaine, un coût ou une consommation d'énergie minimaux, et une qualité maximale d'impression et de finition du produit.

4. Système de traitement de documents selon l'une quelconque des revendications précédentes, dans lequel les spécifications des actions de traitement et des modules de finition constituent des sources uniques de vérité qui sont à la fois des logiciels exécutables et qui disposent d'un format d'échange d'informations entre les experts des domaines de l'imprimante et du module de finition.

5. Système de traitement de documents selon l'une quelconque des revendications précédentes, dans lequel le langage spécifique aux domaines de l'imprimante et du module de finition présente un format de notation textuel ou un format de notation graphique.

6. Procédé de traitement d'un travail d'impression (7) destiné à être imprimé et fini pour aboutir à un produit final conformément aux paramètres du travail d'impression dans un système de traitement de documents (1) comprenant une interface utilisateur, un contrôleur d'impression (3), un moteur d'impression et un système d'édition (2) permettant de spécifier un module de finition (4) à utiliser dans le système de traitement de documents (1) pour la finition du travail d'impression (7), dans lequel le procédé comprend les étapes suivantes :
- le système d'édition (2) reçoit (S1), par l'intermédiaire de l'interface utilisateur, des spécifications (8) d'actions de traitement pour le module de finition (4) dans un langage spécifique au domaine des imprimantes et des modules de finition,
- le système d'édition (2) génère automatiquement, à partir des spécifications (8), un modèle de contraintes, ce modèle de contraintes (9) étant utilisé au sein du système d'édition (2) sans tenir compte du travail d'impression (7),
- le système d'édition (2) générant automatiquement, sur la base des spécifications (8), un modèle de finition exécutable implémenté dans un langage de programmation généraliste, ce modèle de finition exécutable pouvant être exécuté dans le contrôleur d'impression et tenant compte du travail d'impression (7),
- le contrôleur d'impression fournissant, par l'exécution du modèle de finition, des paramètres de traitement et des optimisations de processus en vue d'un objectif lié au produit final résultant du travail d'impression (7),
et
- le contrôleur d'impression traite le travail d'impression (7) sur le moteur d'impression tout en tenant compte des paramètres de traitement et des optimisations de processus fournis.

7. Procédé selon la revendication 6, dans lequel le procédé comprend les étapes consistant à
- le contrôleur d'impression fournissant, en exécutant le modèle de finition, des aperçus du produit final résultant du travail d'impression, et
- l'interface utilisateur affichant les aperçus fournis.

8. Produit logiciel incorporé sur un support non transitoire lisible par ordinateur qui, s'il est exécuté sur un processeur, met en œuvre les étapes du procédé selon l'une quelconque des revendications 6 à 7.
